(19) **Europäisches Patentamt**
**European Patent Office**
**Office européen des brevets**

(11) **EP 1 685 192 B1**

(12) **EUROPEAN PATENT SPECIFICATION**

(45) Date of publication and mention
of the grant of the patent:
**17.02.2010 Bulletin 2010/07**

(51) Int Cl.:
*C08L 51/04* (2006.01) *C08L 75/04* (2006.01)
*C08L 77/00* (2006.01) *C09B 1/00* (2006.01)
*B44C 1/22* (2006.01)

(21) Application number: **04819015.1**

(22) Date of filing: **09.11.2004**

(86) International application number:
**PCT/KR2004/002892**

(87) International publication number:
**WO 2005/049727 (02.06.2005 Gazette 2005/22)**

(54) **RESIN COMPOSITION FOR LASER MARKING**

HARZZUSAMMENSETZUNG FÜR DIE LASERMARKIERUNG

COMPOSITION DE RESINE POUR MARQUAGE AU LASER

(84) Designated Contracting States:
**DE GB**

(30) Priority: **19.11.2003 KR 2003082342**
**27.08.2004 KR 2004068010**

(43) Date of publication of application:
**02.08.2006 Bulletin 2006/31**

(73) Proprietor: **LG Chem, Ltd.**
**Youngdeungpo-gu**
**Seoul 150-721 (KR)**

(72) Inventors:
• **RYOO, Seung-Cheol**
**Seoul 122-080 (KR)**
• **RYU, Bob**
**Daejeon-city 302-280 (KR)**
• **PARK, Lambert**
**Iksan-city, Jeollabuk-do 570-300 (KR)**
• **PARK, Bong-Hyun**
**Daejeon-city 305-750 (KR)**

(74) Representative: **Rambelli, Paolo et al**
**Jacobacci & Partners S.p.A.**
**Corso Emilia 8**
**10152 Torino (IT)**

(56) References cited:
**DE-A1- 4 235 302          JP-A- 7 278 446**
**JP-A- 2000 129 070       JP-A- 2001 139 758**
**KR-A- 2003 056 479       US-A1- 2001 051 688**
**US-A1- 2002 052 438**

• **DATABASE WPI Week 200402 Derwent Publications Ltd., London, GB; AN 2004-019023 XP002426131 -& KR 2003 056 479 A (CHEIL IND INC) 4 July 2003 (2003-07-04)**
• **DATABASE WPI Week 200411 Derwent Publications Ltd., London, GB; AN 2004-102516 XP002425543 -& JP 2003 176396 A (TECHNO POLYMER KK) 24 June 2003 (2003-06-24)**

## Description

### Technical Field

The present invention relates to a resin composition for laser marking, and more particularly, to a resin composition for laser marking, which has high contrast and excellent chemical resistance and is capable of easily adjusting transparency of finished products in marking white characters or marks using a laser beam.

### Background Art

Conventionally, in order to mark characters or marks on a surface of a plastic product, tampon print or silk screen print has been widely used. However, such a printing operation is quite complex, requiring skilled workers and much time. Further, it is quite difficult to mark characters or marks on an irregular surface. In order to prevent primarily coated characters or marks from being scratched or stripped, it is generally necessary to perform addtional post-treatment steps, e.g., curing by UV irradation, after forming a transparent coating. In the case of performing the post-treatment by UV curing, it is substantially impossible to recycle materials. Further, a solvent used during the post-treatment may cause a serious environmental problem due to contamination of a workplace or volatilization of toxic chemicals.

Another way to mark characters or marks on a surface of a plastic product is a compressed labeling method. However, this method is dsadvantageous in that the marked characters or marks are not permanent.

To solve the above-mentioned problems, recently, a method of marking characters or marks on a surface of a plastic product using a laser beam has recently been widely used, which is called a laser marking method. Although a relatively high initial investment is involved compared to other conventional marking methods, the laser marking method is widely employed owing to its various advantages. That is, according to this method, characters or marks are designed using a computer, or, if necessary, the design of the characters or marks can be easily changed, fast and efficient marking is enabled, and elaborately, uniformly marked products can be produced. Also, even unskilled workers can perform the marking work without defects. Further, since this laser marking method is carried out in a non-contact type, it allows characters or marks to be easily marked even on an irregular surface. Since a solvent is not used, problems of environmental contamination or toxicity are not caused. Another advantage is that materials are recyclable. Thus, applications of such laser marking technique are rapidly growing.

In the laser marking technique, the surface of a marked product made of a resin is foamed at a temperature of drectly below a melting point by absorbing a laser beam energy, a laser-irradiated portion is evaporated to be engraved, or an instantaneous chemical change occurs on a marked surface for color change and blenching. However, in the case of marking white characters or signs on a black Background by laser irradation, the white color of the marked characters or signs may not be vivid due to deposit of carbon residues or oxidzed materials produced by excess laser beam energy during the laser marking process. When a laser marked product contacts various chemical substances during use, chemical cranks may be easily caused to the surface of the marked product. For example, when a component product of a refrigerator contacts a foaming agent during foaming process, or when an injection molded product is contaminated, an organic solvent is used for cleaning the product, so that chemical resistance of the product becomes a critically important issue.

Japanese Patent Laid-open Publication No. 2001-302922 discloses a resin composition for laser marking comprising an ABS resin, maleimide-based copolymer, cyanided vinyl copolymer, ferric oxide as a black pigment, and other coloring agent. However, when the disclosed resin composition is used in laser marking, the white color of a marked product is not dstinct, which is due to deposition of carbon residue on a surface of the marked product, undesirably resulting in yellowish.

Japanese Patent Laid-open Publication No. 2000-212451 describes a method of marking white characters or marks on a bleak Background using a composition prepared by blending a PMMA resin and an ABS resin in a predetermined mixing ratio, and addng metal stearate, carbon black and titanium oxide. However, the whiteness of a marked product is not satisfactorily dstinct.

Japanese Patent Laid-open Publication No. 2001-139758 discloses a method of laser marking using at least one compound selected from the group consisting of acrylate ester, aromatic vinyl compound, cyanided vinyl compound and maleimide, an ethylene-(meth)acrylate ester-carbon monoxide-based ternary copolymer resin, carbon black, ferric oxide, triiron tetroxide, or titanium black as a black pigment, in the presence of a rubber polymer. However, it has been found from experiences of using the proposed composition that the degree of transparency cannot be adjusted. If excess pigment is used, the laser absorption energy of the materials used is excessively high, so that an engraving may be overwhelmed by a foaming effect and the surface of a marked product may deteriorate, resulting in deposition of carbon residue on the surface, and making it difficult to obtain vividly white characters or marks. Moreover, chemical resistance in not taught in the disclosed patent at all.

JP 2000-129070 discloses a thermoplastic resin composition for laser marking prepared by blending thermoplastic resin containing rubber-reinforced resin, rubber free polymer, (meth)acrylic ester based polymer, carbon black, and dye.

KR 2003-0056479 discloses a thermoplastic resin composition for laser marking comprising rubbery polymer which contains small diameter and large diameter rubber particles, monomer mixture, molecular weight modifier, colouring pigment, and silicate compound.

US 2001-051688A discloses a butadiene-based rubber-reinforced resin produced by graft-polymerizing monomer components in the presence of particles of a butadiene-based rubber, said butadiene-based rubber-reinforced resin comprising a rubber phase containing particles having a small diameter particle and large diameter particle.

US 2002-052438A discloses thermoplastic resin composition for laser marking capable of developing chromatic colours, comprising: a thermoplastic resin contains a rubber-reinforced resin obtained by polymerising at least one monomer in the presence of a rubber-like polymer and a polymer obtained by polymerising at least one monomer, wherein the rubber-like polymer is a mixture of at least two rubber-like polymers differing in particle size; at least one black system compound; and organic pigment.

DATABASE WPI Week 200411 Derwent Publications Ltd., London, GB; AN 2004-102516 XP002425543-& JP-A-2003 176396 discloses a laser-marking material which comprises a resin component which is a rubber reinforced vinyl-type resin obtained by graft copolymerising an aromatic vinyl monomer, a vinyl cyanide monomer, a meth(acrylic) acid ester monomer in the presence of rubber. The composition further comprises relevant dyes/pigments in relevant quantities.

## Disclosure of Invention

### Technical Solution

The present invention provides a resin composition for laser marking, which readily adjusts degree of transparency when marking white characters or marks using a laser beam, and offers superb whiteness of the marked white characters or marks and excellent chemical resistance.

In accordance with an aspect of the present invention, there is provided a resin composition for laser marking comprising 0.0005~0.5 parts by weight of a black pigment, a black dye, or a mixture thereof; and 0.0001~0.5 parts by weight of a blue dye, a blue pigment, or a mixture thereof based on 100 parts by weight of a transparent resin composition comprising 80~99 wt% of a rubber quarternary transparent copolymer composition having aromatic vinyl compound, alkyl(meth)acrylate ester, and a vinyl cyan compound grafted to a mixture of a rubber polymer consisting of a small diameter polybutadiene rubber latex and a large diameter polybutadiene rubber latex, or a rubber quarternary transparent copolymer consisting of a large diameter polybutadiene rubber latex only, and 1~20 wt% of a thermoplastic urethane elastomer or a thermoplastic amide elastomer, wherein a difference in the refractive index between the thermoplastic urethane elastomer or the thermoplastic amide elastomer and the rubber quaternary transparent copolymer is not greater than 0.01, wherein the small diameter polybutadiene rubber latex has an average particle diameter of 600 to 1500Å, the large diameter polybutadiene rubber latex has an average diameter of 2600 to 5000 Å.

According to preferred embodiment of the present invention, the rubber quarternary transparent copolymer composition contains 3~15 parts by weight of a small diameter polybutadiene rubber latex, 5~25 parts by weight of a large diameter polybutadiene rubber latex, 5~30 parts by weight of an aromatic vinyl compound, 40~70 parts by weight of alkyl(meth)acrylate ester, and 1~20 parts by weight of a vinyl cyan compound.

When the composition according to the present invention is applied to semi-transparent products, the content of the black pigment, the black dye or mixtures thereof is preferably in a range of 0.0005~0.03 parts by weight.

The gel content of the both latexes is in a range of 70~95% and the swelling index is in a range of 12~30.

According to still another embodiment of the present invention, rubber content in the rubber quarternary transparent copolymer having refractive index in a range of 1.508~1.528 is preferably in a range of 5~25 parts by weight.

Preferably, the black pigment has a particle dameter in a range of 17~40 nm.

Also, the blue dye is preferably an anthraquinone-based dye, and the blue pigment may be one selected from the group consisting of phthalocyanine-based, cobalt blue-based, and ultramarine-based pigments.

### Best Mode

The present invention will now be described in more detail.

A resin composition for laser marking according to the present invention comprises (C) 0.0005~0.5 parts by weight of a black pigment, a black dye, or a mixture of these compounds for absorbing laser light; and (D) 0.0001~0.5 parts by weight of a blue dye, a blue pigment, or a mixture of these compounds for enhancing the whiteness of a marked character or sign, based on 100 parts by weight of a transparent resin composition[(A)+(B)] comprising (A) 80~99 wt% of a rubber quarternary transparent copolymer composition having aromatic vinyl compound, alkyl (meth)acrylate ester, and a vinyl cyan compound grafted to a mixture of a rubber polymer consisting of a small dameter polybutadiene rubber latex and a large diameter polybutadiene rubber latex, or a rubber quarternary transparent copolymer consisting of a large diameter polybutadene rubber latex only, the copolymer having excellent impact resistance, chemical resistance and processability, and (B) 1~20 wt% of a thermoplastic urethane elastomer or a thermoplastic amide elastomer having substantially the same refractive index with the rubber transparent polymer for increasing chemical resistance.

(A) Rubber quarternary transparent copolymer

A preparation method of the rubber quarternary transparent copolymer comprises (a) preparing a small diameter polybutadiene rubber latex having an average particle dameter of 600 to 1500Å, a gel content of 70 to 95%, and a swelling index of 12 to 30 by reacting butadene at 55 to 70°C using a polymerization initiator, (b) preparing a large dameter polybutadiene rubber latex having an average particle dameter of 2600 to 5000Å, a gel content of 70 to 95%, and a swelling index of 12 to 30 by increasing the particle size of the small dameter polybutadene rubber latex, and (c) continuously or partially addng 3 to 15 parts by weight of the small dameter polybutadene rubber latex prepared in step (a), 5 to 25 parts by weight of the large dameter polybutadiene rubber latex prepared in step (b), 15 to 30 parts by weight of an aromatic vinyl oompound, 40 to 70 parts by weight of a alkyl (meth)acrylate ester compound, and 1 to 20 parts by weight of a vinyl cyan compound, to be subjected to graft copolymerizat ion at 65 to 80°C.

Since the particle dameter and gel content of the polybutadene rubber latex used in the present invention have a great influence on physical properties, includng transparency and impact strength, of a product, it is quite important to select appropriate mixing ratio of the small dameter polybutadene rubber latex and the large diameter polybutadene rubber latex when using rubber quarternary transparent copolymer composition instead of the large dameter polybutadene rubber latex. In other words, as the particle dameter of the rubber latex is smaller, the transparency of the product is enhanced and the impact strength and flowability deteriorate. As the particle dameter increases, the impact strength becomes higher and the transparency is lowered. Thus, in order to improve both the transparency and the impact strength, it is important to determine an appropriate mixing ratio of small dameter particle rubber latex and large dameter particle rubber latex. If the gel content of the rubber latex is low, monomers may excessively swell in the rubber latex during graft polymerization, that is, an apparent particle dameter increases, thereby lowering the transparency and increasing the impact strength. However, if the gel content of the rubber latex is excessive, the extent of swelling is small, thereby increasing the transparency, and lowering external impact absorbing capability, that is, deteriorating in impact resistance.

The refractive index of a mixture of monomers used in the present invention has an absolutely great influence on the transparency, and is adjusted by amounts of the monomers used and a mixing ratio thereof. In order to ensure transparency, the overall refractive index of grafted ingredents should have a refractive index substantially the same with that of polybutadiene, that is, approximately 1.518. Among the grafted ingredents, the refractive index of styrene is approximately 1.59, the refractive index of methyl methacrylate is approximately 1.49, and the refractive index of acrylonitrile is approximately 1.518.

Among the ingredents of the rubber quarternary transparent copolymer, a polybutadene rubber component is mainly used to increase the impact strength of a product, and is preferably contained in an amount of 5 to 25 parts by weight based on the total amount of the rubber quarternary transparent copolymer. If the amount of the polybutadene rubber component is less than 5 parts by weight, it is quite difficult to achieve a satisfactory impact strength. If the amount of the polybutadene rubber component is greater than 25 parts by weight, the excess gives rise to a reduction in the mechanical strength.

The aromatic vinyl compound serves primarily to enhance processability, and presumably serves in part to supply some of energy enabling an irradated portion to be fused and swollen by absorbing laser light energy in cooperation with a dye or pigment capable of fusing a laser beam. The content of the aromatic vinyl compound used is adjusted within a range of 15 to 30 parts by weight based on the total weight of the rubber transparent quarternary copolymer for the refractive index of the rubber quarternary transparent copolymer to be 1.518.

Meanwhile, the alkyl (meth)acrylate ester compound tends to absorb a relatively small amount of laser light, and is likely to foam rather than to be engraved, thereby enhancing a light dffusion effect and ultimately increasing the whiteness of the marked character or mark. Further, use of the alkyl (meth)acrylate ester compound makes materials experience less deterioration during laser irradation, and enhances weatherability of final products.

The vinyl cyan compound increases chemical resistance. The amount of the vinyl cyan compound used is preferably in a range of 1 to 20 parts by weight based on the total weight of the rubber quarternary transparent copolymer. If the amount of the vinyl cyan compound used is less than 1 parts by weight, the chemical resistance of the resin composition of the present invention, thus the final prouct, deteriorates considerably. If the amount of the vinyl cyan compound used is greater than 20 parts by weight, the prepared polymer has a relatively strong yellowish tint, thereby deteriorating the visibility of the marked character or mark after the laser marking.

During the graft polymerization, the various components may be added to a reactor in a lump method, in a multiple-step addng method, or in a continuously addng method. In the present invention, a combination of the lump adding method and the continuously adding method is adjustably employed.

A method of preparing the rubber quarternary transparent copolymer according to the present invention will now be described in detail.

(1) Preparation of polybutadiene rubber latex

(a)) Preparation of small diameter rubber latex

100 parts by weight of 1,3-butadene, 1 to 4 parts by weight of emulsifier, 0.1 to 0.6 parts by weight of a polymerization initiator, 0.1 to 1.0 parts by weight of an electrolyte, 0.1 to 0.5 parts by weight of a molecular weight controlling agent and 90 to 130 parts by weight of dstilled water are add in a lump to a reactor for reaction at 50 to 65 °C for about 7 to about 12 hours. Further, 0.05 to 1.2 parts by weight of a molecular weight controlling agent is additionally added in a lump for reaction at 55 to 70 °C for about 5 to about 15 hours, thereby yieldng small diameter polybutadene rubber latex having an average particle diameter of 600 Å to 1500 Å and a gel content of 70 % to 95 %, and a swelling index of 12 to 30.

Examples of the emulsifier useful in the present invention include alkylaryl sulfonate, alkali methyl alkyl sulfate, sulfonated alkyl ester, fatty acid soap, alkali metal salts of rosin acid, and the like, which may be used singly or in a combination of at least two compounds. The polymerization initiator may be a water-soluble persulfate compound or peroxy compound, and a redox initiator system can be used as the initiator. Preferred examples of the water-soluble persulfate soluble compound include a sodium persulfate compound, potassium persulfate compound and the like. Examples of peroxy compound initiator include cumene hydroperoxide, diisopropyl benzenehydroperoxide, tertiary butyl hydroperoxide, p-methane hydroperoxide, benzoylperoxide, and the like, which a re used singly or in a combination of at least two compounds. A zobisisobutyronitrile (AIBN) may be used.

Examples of the electrolyte useful in the present invention include $KCl$, $NaCl$, $KHCO_3$, $NaHCO_3$, $K_2CO_3$, $Na_2CO_3$, $KHSO_3$, $NaHSO_3$, $K_4P_2O_7$, $K_3PO_4$, $Na_3PO_4$, $K_2HPO_4$, $Na_2HPO_4$, and the like. These compounds can be used singly or in a combination of at least two compounds. Preferred examples of the molecular weight controlling agent include mercaptans, and the like.

(b) Preparation of large diameter rubber latex (Fusion of small diameter rubber latexes)

3 to 4 parts by weight of an aqueous acetic acid solution was slowly added to 100 parts by weight of small diameter rubber latex having a particle diameter of 600 Å to 1500 Å, a gel content of 70 % to 95 % and a swelling index of 12 to 30 to make particles bulky with stirring, and stopped stirring to prepare large diameter rubber latex having a particle diameter of 2600 Å to 5000 Å, a gel content of 70 % to 95 % and a swelling index of 12 to 30. The large diameter rubber latex used to impart impact resistance may also be prepared by a drect polymerization method. However, the polymerization method requires a long reaction time and is limited in yieldng large diameter rubber latex having a high gel content. Thus, in order to prepare large diameter rubber latex having a high gel content within a short time, it is preferable that small diameter rubber latex having a high gel content is first prepared and large diameter rubber latex is then prepared by making particles of the small diameter rubber latex bulky by addng an acidic material to the small diameter rubber latex.

(2) Preparation of graft copolymer

To a mixture of 3 to 15 parts by weight of the small diameter polybutadene rubber latex and 5 to 25 parts by weight of the large diameter rubber latex small diameter polybutadene rubber latex prepared by the above-described method were added 15 to 30 parts by weight of an aromatic vinyl compound, 40 to 70 parts by weight of an alkyl (meth) acrylate ester compound, and 1 to 20 parts by weight of a vinyl cyan compound, and graft copolymerized using 0.2 to 0.6 parts by weight of an emulsifier, 0.2 to 0.6 parts by weight of a molecular weight controlling agent, and 0.05 to 0.3 parts by weight of a polymerization initiator. Preferably, the graft copolymerization is preferably performed at 65 °C to 80 °C for about 4 to about 7 hours. In the polymerization, usable examples of the alkyl (meth)acrylate ester compound useful include methyl methacrylate, methyl acrylate, and the like, usable examples of the aromatic vinyl compound include styrene, α-methylstyrene, o-ethylstyrene, p-ethylstyrene, vinyl toluene, and the like, and usable examples of the vinyl cyan compound include acrylonitrile, methacrylonitrile, α-ethylacrylonitrile, and the like. Examples of the emulsifier useful in the polymerization include alkyl aryl sulfonate, alkali metal sulfate, sulfonated alkyl ester, fatty add soap, alkali metal salts of rosin acid, and the like, which can be used alone or as a mixture of more than two kinds. Representative examples of the molecular weight controllig agent include tert-didecylmercaptan and the like. Examples of the polymerization initiator include redox catalyst system compounds composed of peroxides such as cumene hydro peroxide, diisopropyl benzene hydroperoxide, or a persulfate compound, and reducing agents such as sodium formaldehyde sulfoxylate, sodium ethylene damine tetraacetate, ferrous sulfate, dextrose, sodium pyrrolinate, or sodium sulfite. A polymerization conversion ratio of the latex acquired after polymerization is not less than 98%. The latex is coagulated using aqueous calcium chloride solution, followed by dehydrating and drying, thereby obtaining rubber quarternary transparent copolymer powder.

(B) Thermoplastic elastomer

A thermoplastic elastomer is used to enhance chemical resistance against various solvents used in intermedate processes, such as foaming, cleansing agents used for removing contaminants after injection moldng, or solvents which final products may contact during actual use. The thermoplastic elastomer is also used to assist various inorganic addtives added to facilitate foaming during laser marking to be dspersed and to prevent the inorganic additive from impairing the impact strength of the resin composition for laser marking. When the laser marking resin is prepared using only the rubber quarternary transparent copolymer, it has good laser markability but poor chemical resistance, so that chemical cracks may be generated due to various chemicals which may be contracted during intermediate processes or actual use. To address this, the thermoplastic elastomer is used to improve the chemical resistance of the rubber quarternary transparent copolymer without impairing the transparency thereof.

The rubber quarternary transparent polymer of the thermoplastic urethane elastomer or thermoplastic amide elastomer has good compatibility owing to the interactions, e.g., a secondary polar bondng, between an amide group in the thermoplastic urethane elastomer or the thermoplastic amide elastomer and a carboxyl group in the rubber quarternary transparent copolymer. In addtion, interaction between an alkyl ether group and a styrene group in the elastomer improves compatibility of the elastomers. Thus, when the refractive index of the thermoplastic urethane elastomer or the thermoplastic amide elastomer is similar to that of the rubber quarternary transparent copolymer, the overall transparency of the blend composition can be maintained by the interaction therebetween.

In the case of forming an opaque laser marking product, it is not necessary to consider the refractive index of the thermoplastic elastomer. In the case of forming a semi-transparent laser marking product, it is preferable that a difference in the refractive index between the thermoplastic urethane elastomer or the thermoplastic amide elastomer and the rubber quarternary transparent copolymer is not greater than 0.01. If the difference in the refractive index between the thermoplastic urethane elastomer or the thermoplastic amide elastomer and the rubber quarternary transparent copolymer is greater than 0.01, as the amount of the thermoplastic elastomer used increases, the transparency of the resin composition, thus the final product tend to deteriorate.

Since the thermoplastic urethane elastomer or the thermoplastic amide elastomer is highly hydrophilic, the final product does not adsorb dust during actual use and improves low-temperature impact resistance and degree of elongation.

(C) Black pigment, black dye, or mixture thereof

A black pigment, a bleak dye, or a mixture thereof provides energy needed to cause polymeric molecular chains to swell by absorbing laser beam energy, and is dsoolored by being oxidized, thereby rendering white characters or marks to be visible to human eyes. Thus, the properties and amounts of these materials used have a great influence on whiteness and/or visibility of the characters or marks.

If the black pigment is excessively used, several adverse effects may be exhibited, though it can be laser marked with a lesser amount of laser beam energy. That is, excessive oxidation residues may be created, some of unoxidzed black pigments may remain on the background color, engraving may overwhelm foaming due to excessive energy supplied, and a surface of the marked product may become messy due to overly facilitated oxidation and carbonization of the resin composition. Conversely, if the amount of the black pigment is too small, the energy supplied to the marking surface is not enough to make the polymer molecular chains difficult to swell, and the laser beam energy required for laser marking increases, so that the marked surface may have a yellowish tint or laser marking performance may become poor. In the case of producing a semi-transparent marking product, the black pigment or the bleak dye is used in a limited amount to maintain the transparency, demanding for increased laser beam energy for marking.

(C-1) Bleak pigment

Carbon black used as a black pigment preferably has a particle dameter in a range of 17 to 40 nm, and is preferably contained in an amount of 0.0005 to 0.5 parts by weight. If the particle dameter of the black pigment is less than 17 nm, a large amount of energy is consumed. If the particle dameter of the black pigment is greater than 40 nm, the tensile strength and impact strength may deteriorate. The amount of the black pigment used depends upon whether a product to be laser marked is necessarily opaque or transparent.

In a case of producing an opaque product, the black pigment is preferably used in an amount of 0.02 to 0.5 parts by weight based on 100 parts by weight of the transparent resin composition (A+B), dependng on a tone of a background color. If the amount of the black pigment used is less than 0.02 parts by weight, the product becomes transparent. In order to make the product opaque, titanium oxide or other inorganic fillers may be added, which may, however, result in lowering of blackness. When the background color is bleak or blue, a small amount of carbon black is generally used, and when white marking on a gray background is intended to achieve, titanium oxide is typically used, requiring a large amount of a black pigment.

In a case of producing a transparent product, 0.0005 to 0.03 parts by weight of carbon black is preferably used from the viewpoint of transparency. To adjust the transparency, the carbon black may be used in combination of a black dye, if necessary. In general, when a transparent or semi-transparent product is marked, a laser marking work is performed with increased laser power due to a limited amount of carbon black capable of absorbing energy. If the amount of carbon black is less than 0.0005 parts by weight, the amount of laser beam energy absorbed is too small to properly achieve marking of characters or marks on the transparent or semi-transparent product. If the laser power is overly increased to perform marking, however, irradation of a laser beam with high energy may cause some ingredents of the composition to be carbonized, which is undesirable. If the amount of carbon black is greater than 0.03 parts by weight, the transparency is considerably deteriorated, making it difficult to produce transparent or semi-transparent products.

(C-2) Black dye

In order to adjust the Background color and transparency of a transparent or semi-transparent product, a black dye is typically used. In a case where carbon black is used alone, the transparency is adjusted in a limited manner. Thus, in order to adjust the transparency appropriately, the black dye having good dspersability is used in combination with carbon black. The amount of the black dye used is preferably in a range of 0.0001 to 0.1 parts by weight. In order to change other background colors, dyes having various colors may also be used in combination with the black dye.

(D) Blue dye, blue pigment or mixture thereof

A blue dye, a blue pigment, or a mixture thereof are used to improve whiteness and visibility of characters or marks to be marked. The blue dye or the blue pigment removes a yellowish tint produced when a surface of a laser marked product is partially oxidzed due to energy absorbed during laser marking, thereby further enhancing whiteness of the characters or marks. In particular, as substance capable of absorbing laser beam energy exists in a small quantity, like in a transparent or semi-transparent product, it is necessary to increase the intensity of laser beam irradation, the product is vulnerable to oxidation. In this case, dstinctly visible white characters or marks can be marked by adjusting the amount of the blue dye or the blue pigment according to the extend of oxidation.

Examples of the blue dye useful in the present invention include anthraquinone based dyes, and examples of the blue pigment include phthalocyanine based pigments, cobalt blue based pigments, ultramarine based pigments, and the like.

Generally, the blue dye or the blue pigment as an addtive for enhancing whiteness is preferably used in an amount of 0.0001 to 0.5 parts by weight.

Meanwhile, the resin composition for laser marking according to the present invention may further include titanium oxide, which serves to facilitate foaming of the resin during laser beam irradiation. In addition, titanium oxide is used for the purposes of adjusting light transmittance or improving the whiteness of a marked portion during laser marking. If the particle size of titanium oxide becomes large, the titanium oxide imparts a yellowish tint to the characters or marks to be laser marked, while exhibiting good light shieldng capability. If the particle size of titanium oxide becomes small, the characters or marks to be laser marked will have a slightly bluish tint, increasing the visibility of the marked characters or marks. In addtion, in order to facilitate foaming of the resin, various inorganic addtives, e.g., talc, as well as titanium oxide may be used. In this case, if the inorganic addtives are not dspersed properly, a surface of the marked product becomes uneven. Thus, a master batch is preferably used. Use of the inorganic addtive may deteriorate impact strength of the product. However, since the composition according to the present invention includes thermoplastic urethane elastomer or thermoplastic amide elastomer, deterioration of impact strength can be reduced and the inorganic addtive can be effectively dspersed.

All the above-described components, including the rubber quarternary transparent copolymer powder, the thermoplastic elastomer, the black pigment, the black dye, the blue dye, the blue pigment, and so on, are mixed together and extruded at a temperature of about 180°C to about 230°C, thereby preparing the resin composition for laser marking according to the present invention in the form of a master batch pellet. In the preparation of the master batch pellets or chips, an antioxidant, a thermal stabilizer, lubricant, a weatherability enhancer, an antistatic agent, an antifungal agent, and the like, may be added if necessary. In addtion, other colorants for adjusting colors may be optionally added.

Hereinafter, the present invention will be described in more detail through the following examples, which, however, should not be construed as a limitation upon the scope of the present invention.

**Mode for Invention**

Preliminary Example 1

1-(1) : Preparation of polybutadene rubber latex

(a) Preparation of small dameter rubber latex

110 parts by weight of distilled water, 100 parts by weight of 1,3-butadiene as a monomer, 1.2 parts by weight of potassium rosinate as an emulsifier, 1.5 parts by weight of potassium oleate, 0.1 parts by weight of $Na_2CO_3$ as an electrolyte, 0.5 parts by weight of $KHCO_3$, and 0.3 parts by weight of tert-dodecyl mercaptan (TDDM) as a molecular weight controlling agent were placed together in a lump in a nitrogen-substituted polymerization reactor (autoclave). The reaction temperature was raised to 55°C, and then the reaction was initialized by addng in a lump 0.3 parts by weight of potassium sulfite as an initiator to the reactor, and reacted for 10 hrs. Thereafter, 0.05 parts by weight of TDDM was further added to the reactor, and then the reaction was completed by reacting for 8 hrs at 65°C. As a result, rubber latex having a particle diameter of 1000 Å, a gel content of 90 %, and a swelling index of 18.

(b) Preparation of large dameter rubber latex (Fusion of small dameter rubber latex)

100 parts by weight of the prepared small diameter rubber latex was added to a realtor, the stirring speed was controlled to 10 rpm, and the temperature was controlled to 30 °C, and then 3.5 parts by weight of an aqueous solution of 7 wt % acetic acid was slowly added to the reactor over a time of 1 hr. Thereafter, the agitation was stopped, thereby preparing large dameter rubber latex through fusion of the small diameter rubber latex, the large diameter rubber latex having a particle diameter of 3000 Å, a gel content of 90 %, and a swelling index of 17.

1-(2): Preparation of graft copolymer

100 parts by weight of dstilled water, 0.2 parts by weight of sodium oleate as an emulsifier, 18.72 parts by weight of methyl methacrylate, 7.28 parts by weight of styrene, 3.33 parts by weight of acrylonitrile, 0.2 parts by weight of TDDM , 0.048 parts by weight of sodium pyrophosphate, 0.012 parts by weight of dextrose, 0.001 parts by weight of ferrous sulfate, and 0.04 parts by weight of cumene hydroperoxide were added in a lump to 12 parts by weight of the large dameter rubber latex prepared by the above-described method in a nitrogen-substituted polymerization reactor at 50 °C. Then, the reaction temperature was raised up to 73 °C over 2 hours. An emulsified mixture solution of 6 0 parts by weight of dstilled water, 0.4 parts by weight of sodium oleate, 37.44 parts by weight of methyl methacrylate, 14.56 parts by weight of styrene, 6.67 parts by weight of acrylonitrile, 0.25 parts by weight of TDDM , 0.048 parts by weight of sodium pyrophosphate, 0.012 parts by weight of dextrose, 0.001 parts by weight of ferrous sulfate, and 0.10 parts by weight of cumene hydroperoxide, was continuously added to the reactor over a time of 4 hours, following by raising the reaction temperature to 76 °C, and the reaction was completed by aging for 1 hour. The polymerization conversion rate was approximately 99.5 %, and the solid type coagulate content was 0.1%. This latex was solidified with aqueous solution of calcium chloride, and washed, yielding powder, which is called a rubber quarternary transparent copolymer A1.

Preparatory Example 2: Preparation of graft copolymer

100 parts by weight of dstilled water, 0.2 parts by weight of sodium oleate as an emulsifier, 11.98 parts by weight of methyl methacrylate, 4.52 parts by weight of styrene, 4 parts by weight of acrylonitrile, 0.2 parts by weight of tert-dodecylmercaptan, 0.048 parts by weight of sodium pyrophosphate, 0.012 parts by weight of dextrose, 0.001 parts by weight of ferrous sulfate, and 0.04 parts by weight of cumene hydroperoxide were added in a lump to a mixture of 8 parts by weight of the small dameter rubber latex and 10 parts by weight of the small dameter rubber latex prepared by the above-described method in a nitrogen-substituted polymerization reactor at 50 °C. Then, the reaction temperature was raised up to 73 °C over 2 hours. A emulsified mixture solution of 70 parts by weight of dstilled water, 0.4 parts by weight of sodium oleate, 35.92 parts by weight of methyl methacrylate, 13.58 parts by weight of styrene, 12 parts by weight of acrylonitrile, 0.25 parts by weight of tert-dodecylmercaptan, 0.048 parts by weight of sodium pyrophosphate, 0.012 parts by weight of dextrose, 0.001 parts by weight of ferrous sulfate, and 0.10 parts by weight of cumene hydroperoxide, was continuously added over a time of 4 hours, following by raising the reaction temperature to 76 °C, and the reaction was completed by aging for 1 hour. The polymerization conversion rate was approximately 99.8 %, and the solid type coagulate content was 0.12%. This latex was solidified with aqueous solution of calcium chloride, and washed, yieldng powder, which is called a rubber quarternary transparent copolymer A2.

Preparatory Example 3

150 parts by weight of dstilled water, 0.5 parts by weight of sodium oleate as an emulsifier, 49.74 parts by weight of methyl methacrylate, 17.26 parts by weight of styrene, 8 parts by weight of acrylonitrile, 0.5 parts by weight of tert-dodecylmercaptan, 0.096 parts by weight of sodium pyrophosphate, 0.024 parts by weight of dextrose, 0.002 parts by weight of ferrous sulfate, and 0.08 parts by weight of cumene hydroperoxide were continuously added in a lump to 25 parts by weight of the large dameter rubber latex prepared by the above-described method in a nitrog en-substituted polymerization reactor at 73 °C over 5 hours, and reacted, following by raising the reaction temperature to 80 °C, and the reaction was completed by aging for 1 hour. The polymerization conversion rate was approximately 99.2 %, and the solid type coagulate content was 0.3%. This latex was solidified with aqueous solution of calcium chloride, and washed, yieldng powder, which is called a rubber quarternary transparent copolymer A3.

Example 1

97 parts by weight of the rubber quarternary transparent copolymer A1 prepared in Preparatory Example 1 and 3 parts by weight of thermoplastic urethane elastomer having a refractive index of 1.518 (K470A manufactured by Kolon Chemical Co., Ltd.) as basic components of a resin composition, and 0.05 parts by weight of carbon bleak and 0.03 parts by weight of a blue dye (Macrolex Blue 05 manufactured by Bayer Corp.) as colorants, were placed and mixed in a mixer, followed by extrudng using a double screw extruder while adjusting the temperature of the extruder cylinder to approximately 200°C, thereby preparing pellets. The prepared pellets were subjected to injection moldng, thereby preparing 3 mm thick plate-shaped samples. The prepared plate-shaped samples were laser marked using a Nd:YAG laser marking machine (Model name: SY-2000) manufactured by EO Technique Co., Ltd. under the conditions of 1064 nm in wavelength, 5 kHz in vibration frequency, 3 Watt in laser power.

Examples 2~6

Laser marking was performed on samples having compositions listed in Table 1 in the same manner as in Example 1, and physical properties of the samples were evaluated. The results of the evaluation are summarized in Table 1 below.

Example 7~12

Laser marking was performed on samples having compositions listed in Table 2 in the same manner as in Example 1 except that the laser power has been varied to a value of 3~25 watts, and physical properties of the samples were evaluated. The results of the evaluation are summarized in Table 2 below.

Comparative Example 1

Laser marking was performed on samples having compositions listed in Table 3 in the same manner as in Example 1 using only the rubber transparent quarternary copolymer A1 except thermoplastic elastomer and auxiliary colorants for enhancing whiteness. Physical properties of the samples were evaluated, and the results of the evaluation are summarized in Table 3 below.

Comparative Examples 2~8

Laser marking was performed on samples having compositions listed in Table 3 in the same manner as in Example 1 except that the laser power has been varied to a v alue of 3~25 watts. Physical properties of the samples were evaluated, and the results of the evaluation are summarized in Table 3 below.

Evaluation of the physical properties of the marked products prepared in Examples Comparative Examples were performed in the following manner.

Izod impact strength

A notch was formed on a 1/8 inch sample and the impact strength was measured as per ASTM D256 using an Izod impact strength tester.

Transparency

The degree of transparency was measured as per ASTM D 1003.

Refractive index

The refractive index was measured as per ASTM D 542.

Markability

The markability was evaluated through observation by naked eye.

Chemical resistance-1

A 1/8 inch tensile strength sample was placed in a 0.7 % strain zig to be fixed, immersed in cyclopentane for 1 minute, taken out and allowed to stand at room temperature for 4 hours. Here, the elongation of the sample was evaluated before and after immersing in cyclopentane using an universal tester [Instron Corporation, Model #: 4202] and the elongation maintenance rate was computed using Equation 1:

[Equation 1]

$$\text{Elongation maintenance rate(\%)} = [(\text{Elongation after immersion})/(\text{Elongation before immersion})] \times 100.$$

Chemical resistance-2

A 1/8 inch tensile strength sample was placed in a 0.7 % strain zig to be fixed, and covered with tissue paper, followed by addng hexane drowise 5 times using a pipette. Here, the elongation of the sample was evaluated before and after dropwise adding hexane using an universal tester [Instron Corporation, Model #: 4202], and the elongation maintenance rate was computed using Equation 2:

[Equation 2]

$$\text{Elongation maintenance rate(\%)} = [(\text{Elongation after dropwise adding})/(\text{Elongation before dropwise adding})] \times 100.$$

Table 1

| | | Example | | | | | |
|---|---|---|---|---|---|---|---|
| | | 1 | 2 | 3 | 4 | 5 | 6 |
| Rubber transparent quaternary copolymer | A1 | 97 | | | 97 | 97 | 98 |
| | A2 | | 95 | | | | |
| | A3 | | | 97 | | | |
| Thermoplastic B2 elastomer | B1 | 3 | 5 | 3 | | | 2 |
| | | | | | 3 | | |
| | B3 | | | | | 3 | |
| Black pigment and black dye | Carbon black | 0.05 | 0.05 | 0.05 | 0.05 | 0.05 | 0.05 |
| | Black dye | | | | | | |
| Whiteness enhancing auxiliary colorant | Blue dye | 0.03 | | 0.03 | 0.03 | 0.03 | 0.03 |
| | Blue pigment | | 0.02 | | | | |
| Evaluation item | Impact strength | 10 | 15 | 25 | 10 | 11 | 11 |
| | Transparency | Opaque | Opaque | Opaque | Opaque | Opaque | Opaque |
| | Chemical resistance-1 | 93% | 97% | 100% | 96% | 100% | 90% |
| | Chemical resistance-2 | 67% | 75% | 96% | 72% | 100% | 65% |
| | Background color | Black | Black | Black | Black | Black | Black |
| | Marking color | White | White | White | White | White | White |
| | Markability | Good | Good | Good | Good | Good | Good |
| Laser power(Watt) | | 3 | 3 | 3 | 3 | 3 | 3 |

N.B.) A1: 12 wt% in rubber content, 1.517 in refractive index;

A2: 18 wt% in rubber content, 1.518 in refractive index;

A3: 23 wt% in rubber content, 1.518 in refractive index;

B1: thermoplastic urethane elastomer having a refractive index of 1.518 (K470A manufactured by Kolon Chemical Co., Ltd.);

B2: thermoplastic urethane elastomer having a refractive index of 1.525 (K285PCAT manufactured by Kolon Chemical Co., Ltd.);

B3: thermoplastic amide elastomer having a refractive index of 1.51 (Pelestat NO6321 manufactured by Sanyo Chemical Ind.);

Carbon black: Pigment Black 07 manufactured by Nippi Korea;

Black dye: Diaresin Black B manufactured by Mitsubishi Chemical Corp.;

Blue dye: Macrolex Blue 3R manufactured by Bayer Corp.; and

Blue pigment: Ultramarine Blue 05 manufactured by Holiday Corporation.

Table 2

| | | Example | | | | | |
|---|---|---|---|---|---|---|---|
| | | 7 | 8 | 9 | 10 | 11 | 12 |
| Rubber transparent quaternary copolymer | A1 | 97 | 92 | | 97 | 97 | 97 |
| | A2 | | | 95 | | | |
| | A3 | | | | | | |

(continued)

| | | Example | | | | | |
|---|---|---|---|---|---|---|---|
| | | 7 | 8 | 9 | 10 | 11 | 12 |
| Thermoplastic elastomer | B1 | 3 | 8 | 5 | | | 3 |
| | B2 | | | | | 3 | |
| | B3 | | | | 3 | | |
| Black pigment and black dye | Carbon black | 0.015 | 0.01 | 0.008 | 0.04 | 0.05 | 0.02 |
| | Black dye | | 0.015 | 0.01 | | | |
| Whiteness enhancing auxiliary colorant | Blue dye | | 0.003 | 0.05 | 0.06 | | 0.015 |
| | Blue pigment | 0.02 | 0.02 | | | 0.03 | |
| | Titanium oxide | | | | 0.3 | 0.5 | 0.1 |
| Evaluation item | Impact strength | 10 | 12 | 15 | 10 | 11 | 11 |
| | Transparency | Semi-transparent | Semi-transparent | Semi-transparent | Opaque | Opaque | Opaque |
| | Chemical resistance-1 | 95% | 100% | 92% | 100% | 94% | 96% |
| | Chemical resistance-2 | 70% | 98% | 87% | 100% | 94% | 92% |
| | Background color | Black | Black | Blackish blue | Grayish blue | Grayish blue | Dark gray |
| | Marking color | White | White | White | White | White | White |
| | Markability | Good | Good | Good | Good | Good | Good |
| Laser power(Watt) | | 25 | 25 | 20 | 7 | 3 | 7 |

Table 3

| | | Comparative Example | | | | | | | |
|---|---|---|---|---|---|---|---|---|---|
| | | 1 | 2 | 3 | 4 | 5 | 6 | 7 | 8 |
| Polymer | A1 | 100 | | 70 | 30 | | | | 90 |
| | ABS | | 25 | | | 25 | 30 | 30 | |
| | SAN | | 25 | 30 | 70 | | | 70 | |
| | PMMA | | 50 | | | 75 | 70 | | 10 |
| Black pigment and black dye | Carbon black | 0.05 | 0.15 | 0.5 | | 0.5 | 0.5 | 0.5 | |
| | Tri-iron tetroxide | | | | 0.3 | | | | 0.5 |
| Whiteness enhancing auxiliary colorant | Titanium oxide | | | | | | 0.3 | | 0.2 |
| Evaluation item | Impact strength | 10 | 14 | 7 | 3 | 12 | 17 | 19 | 9 |
| | Transparen cy | Opaque | Opaque | Opaque | Opaque | Opaque | Opaque | Opaque | Opaque |
| | Chemical resistance-1 | 23% | 75% | 23% | 16% | 65% | 84% | 75% | 25% |
| | Chemical resistance-2 | 59% | 77% | 22% | 18% | 53% | 82% | 80% | 25% |
| | Background color | Block | Black | Black | Black | Black | Black | Black | Black |
| | Marking color | White | White | White | White | White | White | White | White |
| | Markability | Good | Poor | Poor | Poor | Poor | Poor | Poor | Poor |
| Laser power(Watt) | | 3 | 25 | 3 | 7 | 3 | 3 | 3 | 3 |

EP 1 685 192 B1

12

N.B.) ABS: butadene/styrene/acrylonitrile (wt%)=50/36/15,

SAN: styrene/acrylonitrile (wt%)=75/25,

PMMA: IF-850 manufactured by LG Chemical Co., Ltd.

As shown in Table 1, samples prepared by the methods described in Examples 1~6 showed good elongation maintenance rate after being immersed in cyclopentane or hexane. Marking states of the marked samples prepared in Examples 1 to 6 were visually observed. The observation results showed that the marked samples had good whiteness on an opaque bleak Background.

The samples prepared by the methods described in Examples 7~9 were all semi-transparent. When cyclopentane and hexane were used, the elongation maintenance rate were good, thereby obtaining a marked sample having good whiteness on a semi-transparent, blank Background.

The opaque samples with changed background colors produced in Examples 10~12 exhibited good whiteness in the characters or marks marked thereon. The elongation maintenance rate of each sample was good after being immersed in cyclopentane or hexane.

In Comparative Example 1 in which the background color of the product was opaque black, the marked characters or marks were all white in a good condition. However, the elongation maintenance factor was noticeably reduced, after being immersed in cyclopentane or hexane.

In Comparative Examples 2~8 in which the background color of each of the products was opaque black and the marked characters or marks were carbonized and stained, so that the surface was messy and white with a strongly yellowish tint. Most of the samples had reduced elongation maintenance rate after being immersed in cyclopentane or hexane.

As described above, the marked product produced using the resin composition for laser marking according to the present invention has high chemical resistance. In addtion, the use of the resin composition for laser marking allows for achievement of highly visible white markings without a yellowish tint and easily adjustable transparency of the marked product.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1. A resin composition for laser marking comprising:

   0.0005 to 0.5 parts by weight of a black pigment, a black dye, or a mixture thereof; and
   0.0001 to 0.5 parts by weight of a blue dye, a blue pigment, or a mixture thereof based on 100 parts by weight of a transparent resin composition comprising 80-99 wt% of a rubber quarternary transparent copolymer composition having aromatic vinyl compound, alkyl (meth)acrylate ester, and a vinyl cyan compound grafted to a mixture of a rubber polymer consisting of a small diameter polybutadiene rubber latex and a large diameter polybutadiene rubber latex, or a rubber quarternary transparent copolymer consisting of a large diameter polybutadiene rubber latex only, and 1 to 20 wt% of a thermoplastic urethane elastomer or a thermoplastic amide elastomer,
   wherein a difference in the refractive index between the thermoplastic urethane elastomer or the thermoplastic amide elastomer and the rubber quaternary transparent copolymer is not greater than 0.01,
   wherein the small diameter polybutadiene rubber latex has an average particle diameter of 600 to 1500Å, the large diameter polybutadiene rubber latex has an average diameter of 2600 to 5000 Å.

2. The resin composition for laser marking of claim 1, wherein the rubber quarternary transparent copolymer composition contains 3 to 15 parts by weight of a small dameter polybutadene rubber latex, 5 to 25 parts by weight of a large dameter polybutadene rubber latex, 5 to 30 parts by weight of an aromatic vinyl compound, 40 to 70 parts by weight of alkyl (meth)acrylate ester, and 1 to 20 parts by weight of a vinyl cyan compound.

3. The resin composition for laser marking of claim 1, wherein w hen the composition according to the present invention is applied to semi-transparent products, the content of the black pigment or black dye is in a range of 0.0005 to 0.03 parts by weight.

4. The resin composition for laser marking of claim 1, wherein the gel content of the both latexes is in a range of 70 to 95% and the swelling index is in a range of 12 to 30.

5. The resin composition for laser marking of claim 1, wherein the rubber quarternary transparent copolymer composition may comprise rubber contained in an amount of 5 to 25 parts by weight and having a refractive index of 1.508 to 1.528.

6. The resin composition for laser marking of claim 1, wherein the black pigment has a particle diameter in a range of 17 to 40 nm.

7. The resin composition for laser marking of claim 1, wherein the blue dye is an anthraquinone-based dye, and the blue pigment may be one selected from the group consisting of phthalocyanine-based, cobalt blue-based, and ultramarine-based pigments.


**Patentansprüche**

1. Harz-Zusammensetzung für Laserbeschriftung umfassend :

   0,0005 bis 0,5 Gewichtsteile eines schwarzen Pigments, eines schwarzen Farbstoffs oder einer Mischung davon; und
   0,0001 bis 0,5 Gewichtsteile eines blauen Farbstoffs, eines blauen Pigments oder einer Mischung davon, basierend auf 100 Gewichtsteilen einer transparenten Harz-Zusammensetzung umfassend 80-99 Gew.-% einer quartären transparenten Kautschuk-Copolymer-Zusammensetzung mit einer aromatischen Vinylverbindung, einem Alkyl-(meth)acrylat-ester und einer Vinylcyan-Verbindung auf eine Kautschuk-polymer-Mischung gepfropft, die aus einem Polybutadien-Kautschuklatex mit kleinem Durchmesser und einem Polybutadien-Kautschuklatex mit großem Durchmesser besteht, oder einem quartären transparenten Kautschuk-Copolymer, das nur aus einem Polybutadien-Kautschuklatex mit großem Durchmesser besteht, und 1 bis 20 Gew.-% eines thermoplastischen Urethanelastomers oder eines thermoplastischen Amidelastomers,
   wobei ein Unterschied im Brechungsindex zwischen dem thermoplastischen Urethanelastomer oder dem thermoplastischen Amidelastomer und dem quartären transparenten Kautschuk-Copolymer nicht größer als 0,01 ist, wobei der Polybutadien-Kautschuklatex mit kleinem Durchmesser einen mittleren Partikeldurchmesser von 600 bis 1.500 Å hat, der Polybutadien-Kautschuklatex mit großem Durchmesser einen mittleren Durchmesser von 2.600 bis 5.000 Å hat.

2. Harz-Zusammensetzung für Laserbeschriftung nach Anspruch 1, wobei die quartäre transparente Kautschuk-Copolymer-Zusammensetzung 3 bis 15 Gewichtsteile eines Polybutadien-Kautschuklatex mit kleinem Durchmesser, 5 bis 25 Gewichtsteile eines Polybutadien-Kautschuklatex mit großem Durchmesser, 5 bis 30 Gewichtsteile einer aromatischen Vinylverbindung, 40 bis 70 Gewichtsteile eines Alkyl-(meth)acrylatester und 1 bis 20 Gewichtsteile einer Vinylcyan-Verbindung enthält.

3. Harz-Zusammensetzung für Laserbeschriftung nach Anspruch 1, wobei wenn die Zusammensetzung gemäß der vorliegenden Erfindung auf halbdurchsichtigen Produkten aufgebracht wird, der Gehalt des schwarzen Pigments oder des schwarzen Farbstoffs in einem Bereich von 0,0005 bis 0,03 Gewichtsteilen ist.

4. Harz-Zusammensetzung für Laserbeschriftung nach Anspruch 1, wobei der Gelgehalt beider Latex-Arten in einem Bereich von 70 bis 95% ist und die Schwellzahl in einem Bereich von 12 bis 30 ist.

5. Harz-Zusammensetzung für Laserbeschriftung nach Anspruch 1, wobei die quartäre transparente Kautschuk-Copolymer-Zusammensetzung Kautschuk, der in einer Menge von 5 bis 25 Gewichtsteilen und mit einem Brechungsindex von 1,508 bis 1,528 enthalten ist, umfassen kann.

6. Harz-Zusammensetzung für Laserbeschriftung nach Anspruch 1, wobei das schwarze Pigment einen Partikeldurchmesser in einem Bereich von 17 bis 40 nm hat.

7. Harz-Zusammensetzung für Laserbeschriftung nach Anspruch 1, wobei der blaue Farbstoff ein Farbstoff auf Anthrachinon-Basis ist und das blaue Pigment eines sein kann, das aus der Gruppe bestehend aus Pigmenten auf Phthalocyanin-Basis, Cobaltblau-Basis und Ultramarinblau-Basis ausgewählt ist.

**Revendications**

1. Composition de résine pour un marquage au laser comprenant :

   de 0,0005 à 0,5 partie en poids d'un pigment noir, d'un colorant noir ou d'un mélange de ceux-ci ; et
   de 0,0001 à 0,5 partie en poids d'un colorant bleu, d'un pigment bleu ou d'un mélange de ceux-ci, rapporté à 100 parties en poids d'une composition de résine transparente comprenant 80-99 % en poids d'une composition de copolymère transparent quaternaire de caoutchouc présentant un composé vinylique aromatique, un ester de (méth)acrylate d'alkyle et un composé vinylcyano greffé sur un mélange d'un polymère de caoutchouc constitué d'un latex de caoutchouc de polybutadiène de petit diamètre et d'un latex de caoutchouc de polybutadiène de grand diamètre, ou d'un copolymère transparent quaternaire de caoutchouc constitué d'un latex de caoutchouc de polybutadiène de grand diamètre uniquement et de 1 à 20 % en poids d'un élastomère d'uréthane thermoplastique ou d'un élastomère d'amide thermoplastique,
   dans laquelle une différence de l'indice de réfraction entre l'élastomère d'uréthane thermoplastique ou l'élastomère d'amide thermoplastique et le copolymère transparent quaternaire de caoutchouc est d'au plus 0,01,
   dans laquelle le latex de caoutchouc de polybutadiène de petit diamètre présente un diamètre moyen de particules de 600 à 1 500 Å, le latex de caoutchouc de polybutadiène de grand diamètre présente un diamètre moyen de 2 600 à 5 000 Å.

2. Composition de résine pour un marquage au laser selon la revendication 1, dans laquelle la composition de copolymère transparent quaternaire de caoutchouc contient de 3 à 15 parties en poids d'un latex de caoutchouc de polybutadiène de petit diamètre, de 5 à 25 parties en poids d'un latex de caoutchouc de polybutadiène de grand diamètre, de 5 à 30 parties en poids d'un composé vinylique aromatique, de 40 à 70 parties en poids d'ester de (méth)acrylate d'alkyle et de 1 à 20 parties en poids d'un composé vinylcyano.

3. Composition de résine pour un marquage au laser selon la revendication 1, dans laquelle lorsque la composition selon la présente invention est appliquée sur des produits semi-transparents, la teneur en le pigment noir ou en colorant noir se trouve dans un intervalle de 0,0005 à 0,03 partie en poids.

4. Composition de résine pour un marquage au laser selon la revendication 1, dans laquelle la teneur en gel des deux latex se trouve dans un intervalle de 70 à 95 % et l'indice de gonflement se trouve dans un intervalle de 12 à 30.

5. Composition de résine pour un marquage au laser selon la revendication 1, dans laquelle la composition de copolymère transparent quaternaire de caoutchouc peut comprendre du caoutchouc contenu dans une quantité de 5 à 25 parties en poids et ayant un indice de réfraction de 1,508 à 1,528.

6. Composition de résine pour un marquage au laser selon la revendication 1, dans laquelle le pigment noir présente un diamètre de particules dans un intervalle de 17 à 40 nm.

7. Composition de résine pour un marquage au laser selon la revendication 1, dans laquelle le colorant bleu est un colorant à base d'anthraquinone et le pigment bleu peut être un pigment choisi dans le groupe constitué des pigments à base de phtalocyanine, à base de bleu de cobalt et à base de bleu d'outremer.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000212451 A
- JP 2001139758 A
- JP 2000129070 A
- KR 20030056479
- US 2001051688 A
- US 2002052438 A
- JP 2003176396 A